Europäisches Patentamt

European Patent Office

Office européen des brevets

(19)

(11) Veröffentlichungsnummer: **0 322 501**
**A1**

## (12) EUROPÄISCHE PATENTANMELDUNG

(21) Anmeldenummer: 88109908.9

(22) Anmeldetag: 22.06.88

(51) Int. Cl.⁴: **G01V 1/20 , H04R 1/44 ,
B06B 1/06**

(30) Priorität: 28.12.87 DE 3744282

(43) Veröffentlichungstag der Anmeldung:
05.07.89 Patentblatt 89/27

(84) Benannte Vertragsstaaten:
**DE FR GB IT**

(71) Anmelder: **KRUPP ATLAS ELEKTRONIK GMBH
Postfach 44 85 45 Sebaldsbrücker
Heerstrasse 235
D-2800 Bremen 44(DE)**

(72) Erfinder: **Arens, Egidius, Dipl.-Ing.
Cordstrasse 13
D-2807 Achim(DE)**

(54) **Wandler.**

(57) Es wird ein Wandler für Hydrophone vorgeschlagen, der aus einem Schichtaufbau (10) von Trägerschichten (11) und piezoelektrischer Schicht (15) besteht und bei dem die piezoelektrische Schicht (15) zwischen den Trägerschichten (11) im wesentlichen in der neutralen Ebene (18) des Schichtaufbaus angeordnet ist. Damit erzeugen Biegebeanspruchungen keine Kraftkomponenten, deren · Wirkungsrichtungen in der Ebene der piezoelektrischen Schicht liegen, sodaß durch derartige Kräfte piezoelektrisch generierte Störspannungen vermieden werden.

Die Anwendung derartiger Wandler erfolgt vorzugsweise bei Hydrophonen in Schlepp- oder Längsantennen von Wasserfahrzeugen.

Fig.1a

EP 0 322 501 A1

## Wandler

Die Erfindung betrifft einen Wandler, insbesondere ein Hydrophon, der im Oberbegriff des Anspruchs 1 angegebenen Art.

Für einen derartigen Wandler ist es aus der deutschen Offenlegungsschrift 34 43 869 bekannt, metallisierte, piezoelektrische Folie beiderseits einer Trägerschicht anzuordnen. Diese Trägerschicht muß eine solche Festigkeit aufweisen, daß sich Biegeschwingungsmoden im Betriebsfrequenzband nicht ausbreiten können. Das ist jedoch - wie die verschiedenen Ausführungsformen des Standes der Technik zeigen - nur durch eine dicke, besonders steife, verstärkte Trägerschicht zu erreichen. Wenn jedoch derartige Wandler oder Wandlersysteme an Bordwänden von Schiffen montiert sind, so können infolge der Biegeschwingungen durchaus Kräfte auftreten, die dennoch zu einer Verformung der Trägerschichten führen und somit Störungen des durch den Wandler empfangenen Signals durch Biegewellen unvermeidlich sind.

Der Erfindung liegt die Aufgabe zugrunde, einen vorzugsweise als Hydrophon verwendbaren Wandler der eingangs genannten Art anzugeben, dessen Biegewellenempfindlichkeit auf ein Minimum reduziert ist. Die Aufgabe ist bei einem Wandler der im Oberbegriff des Anspruchs 1 angegebenen Art durch die Merkmale im Kennzeichenteil des Anspruchs 1 gelöst.

Der erfindungsgemäße Wandler ist so konstruiert, daß die piezoelektrische Schicht in der neutralen Faser des gesamten mehrschichtigen Wandlers liegt. Beim Auftreten von Biegewellen erfahren lediglich die inneren und äußeren Schichten des Wandlers eine Längenänderung, d.h. eine Stauchung oder eine Dehnung. Die piezoelektrische Schicht in der neutralen Faser bleibt in ihrer Länge unverändert, so daß keine von Stauchung oder Dehnung der piezoelektrischen Schicht generierten Potentialänderungen zwischen den Metallisierungen der Folie auftreten.

Es ist ein Vorteil derartiger Wandler, die aus folienartigen Schichten aufgebaut werden, daß sie leicht zu konstruieren und mit geringem Aufwand zu fertigen sind. Ferner sind ihre akustischen Eigenschaften, insbesondere die Anforderungen an vertikale und horizontale Richtcharakteristik sowie Nebenzipfeldämpfung, einfach durch die geeignete Auswahl der Flächenmaße der zusammengefügten Schichten zu bestimmen.

Eine vorteilhafte Weiterbildung der Erfindung ergibt sich aus Anspruch 2. Dabei wird durch die weiche Ankopplung der piezoelektrischen Folie über die Zwischenschichten an die Trägerschichten eine Bedämpfung von hochfrequenten Biegewellenanteilen bzw. Biegeschwingungen der Trägermaterialien erreicht.

Vorteilhafte Weiterbildungen der Erfindungen ergeben sich auch aus den Ansprüchen 3 und 4. Durch den Aufbau der Trägerschicht als mehrlagiger Verbundschichtstoff lassen sich mit dünnen Materiallagen zum einen mechanisch sehr steife und zum anderen akustisch sehr gut an die Nutzschallsignale anpaßbare Trägerschichten bilden.

Vorteilhafte Weiterbildungen der Erfindungen ergeben sich auch aus den Ansprüchen 5 und 6. Die alleinige Verwendung von Kunststoffen führt zu sehr leichten Wandlerkonstruktionen mit wenigen Schichten. Die Festigkeit und Biegesteifigkeit der Schichten wird durch eingelagerte, hochfeste Fasern aus Glas-, Kohle- oder Keflar-Fasern erzielt. Die Verwendung von Fasern bei der Herstellung der Trägerschichten erlaubt es, die mechanischen Eigenschaften, d.h. Biegefestigkeit, Schwingungsverhalten bei Wechsellasten, Aufnahme von Scherkräften, an die jeweiligen Anforderungen anzupassen, ohne die akustischen Eigenschaften, d.h. die Schallausbreitung im Trägermaterial, wesentlich zu beeinflussen. Das Trägermaterial mit eingelagerten Fasern wirkt damit im wesentlichen akustisch homogen.

Vorteilhafte Weiterbildungen der Erfindung ergeben sich aus aus den Ansprüche 7 bis 13. Der schichtförmige, flächenhafte Aufbau der Wandler ermöglicht ebenso die Herstellung konzentrischer, hohlzylindrischer Anordnungen. Sie können besonders raumsparend realisiert und insbesondere für dünne Schleppantennen vorteilhaft verwendet werden.

Eine weitere vorteilhafte Weiterbildung der Erfindung ergibt sich auch aus Anspruch 14. Werden zwischen den Trägerschichten mehrere piezoelektrische Schichten angeordnet, so ergeben sich bei elektrischer Zusammenschaltung der Signale höhere Signalpegel, die eine verbesserte Signalverarbeitung ermöglichen. Eine getrennte Auswertung der Signale derartiger mehrfacher paralleler piezoelektrischer Schichten ermöglicht darüber hinaus eine Verbesserung des Signalgeräuschverhältnisses der Wandler.

Die Erfindung wird im folgenden anhand von in der Zeichnung dargestellten Ausführungsbeispielen näher beschrieben. Es zeigen:

Fig. 1a den Schichtaufbau eines Wandlers,

Fig. 1b Schnittbild eines Wandlers unter Biegebeanspruchung,

Fig. 2 einen Wandler mit faserverstärkter Trägerschicht,

Fig. 3 einen Wandler mit mehrlagiger Trägerschicht,

Fig. 4 einen Wandler mit Umhüllung,

Fig. 5 einen Wandler mit integriertem Wandlergehäuse,

Fig. 6a den Schichtaufbau eines konzentrischen Wandlers,

Fig. 6b einen konzentrischen Wandler mit faserverstärkter Trägerschicht,

Fig. 7a eine spiralförmige Wicklung für eine piezoelektrische Schicht,

Fig. 7b eine flache Zylindermantelwicklung für eine piezoelektrische Schicht,

Fig. 8a einen Schleppkabelabschnitt,

Fig. 8b eine Längsantenne mit Abschirmung.

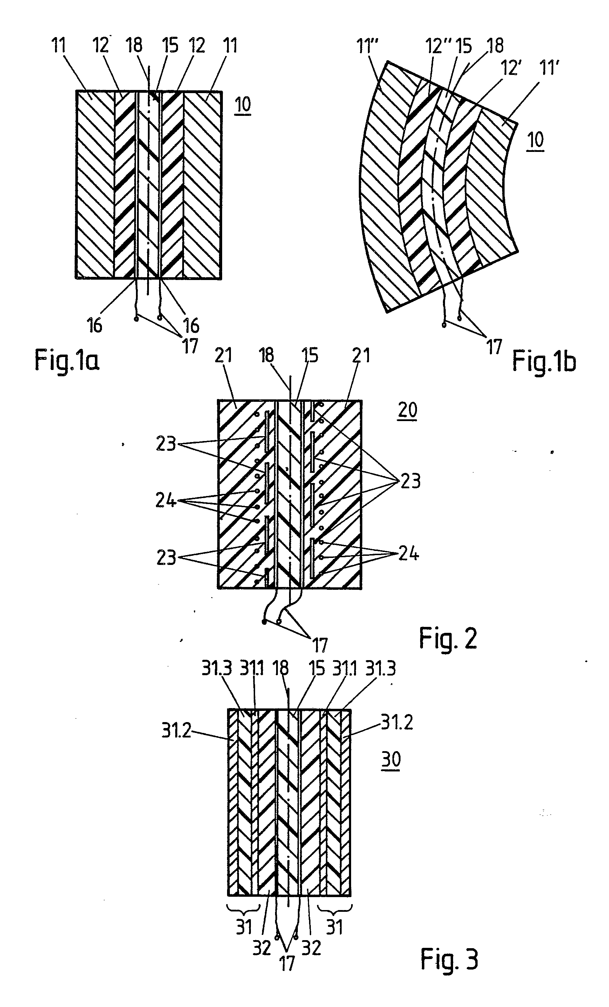

In Fig. 1 ist in einer Schnittzeichnung das Grundprinzip des erfindungsgemäßen Wandlers dargestellt. Zwischen zwei Trägerschichten 11 ist in gleichem Abstand, der durch die Zwischenschichten 12 gebildet wird, eine piezoelektrische Schicht 15 angeordnet. Die piezoelektrische Schicht 15 besteht aus einem polarisierbaren piezoelektrischen Material, z.B. PVDF-Folie, dessen Polarisationsrichtung mit der Flächennormalen der piezoelektrischen Schicht 15 übereinstimmt. Als wirksame piezoelektrische Schichten, d.h. Schichten, die akustische Schallenergie in elektrische Spannungspotentiale wandeln, sind aber auch Elektretfolie oder Kunststoffolien mit eingelagertem Bariumtitanatpulver einsetzbar. Die piezoelektrische Schicht 15 ist mit elektrisch leitfähigen Belägen 16 versehen, an die elektrische Leitungen 17 zur Ableitung der auf piezoelektrischem Wege durch Schalldruck erzeugten Signalspannungen an nachgeschaltete (hier nicht dargestellte) Signalverarbeitungseinrichtung angeschlossen sind.

Die Trägerschichten 11 werden beispielsweise durch dünnes Stahlblech gebildet, dessen akustische Eigenschaften, insbesondere seine akustische Impedanz und die daraus resultierende Dämpfung, zu keiner wesentlichen Dämpfung des auf die piezoelektrische Schicht 15 einwirkenden Schalldrucks führen.

Die Zwischenschichten 12 sind schalltransparent und bestehen aus elastischem oder viskoelastischem Kunststoff oder Gummi. Sie verbinden die mechanisch steifen Trägerschichten 11 mit der piezoelektrischen Schicht 15 dadurch, daß sie entweder selbst ausreichende Haftkräfte in den Grenzschichten bilden oder daß mittels zusätzlicher Klebstoffe die Verbindung in den Grenzschichten erzeugt wird.

Die Schichtdicken der verwendeten Materialien liegen im Bereich einiger µm bis einige 100µm, wobei für die Trägerschichten 11 die 0,5- bis 2-fache Dicke der piezoelektrischen Schicht 15 bevorzugt wird und die Zwischenschichten 12 im allgemeinen dünner als die piezoelektrischen Schichten 15 ausgebildet sind.

Die wesentliche Funktion der Trägerschichten 11 besteht darin, Kräfte, die quer zur Flächennormalen wirken, d.h. Kraftkomponenten in der Ebene der piezoelektrischen Schicht 15 haben, aufzufangen und nicht für die piezoelektrische Schicht 15 wirksam werden zu lassen. Hierbei wirken die elastischen bzw. viskoelastischen Zwischenschichten 12 als Entkopplungsschichten für derartige Scherkräfte. Sie sind darüber hinaus bei Wechsellasten, d.h. periodischen Anregungen der Trägerschichten 11 durch in ihren Flächen liegende Kraftkomponenten, auch als Bedämpfung der Schwingungen wirksam.

Die piezoelektrische Schicht 15 des Wandlers 10 ist in seiner neutralen Faser 18, die als Strichpunktlinie dargestellt ist, angeordnet. Wird der Wandler 10, wie in Fig. 1b ergänzend dargestellt, durch äußere Krafteinwirkungen verbogen, so werden zwar die Trägerschichten 11′ und die Zwischenschicht 12′ gestaucht und die Trägerschicht 11″ sowie die Zwischenschicht 12″ gedehnt, die Länge der piezoelektrischen Schicht 15 in der neutralen Faser 18 bleibt jedoch unter der Voraussetzung großer Biegeradien im Verhältnis zur Schichtdicke unverändert. Damit wirken keine Tangentialkräfte auf die piezoelektrische Schicht 15 ein und es können keine Störspannungen entstehen, die durch Kräfte quer zur Polarisationsrichtung verursacht würden.

Ohne daß eine zusätzliche Darstellung erforderlich ist kann ein weiteres Beispiel für einen erfindungsgemäßen Wandler angegeben werden bei dem auch mehrere, durch Zwischenschichten getrennte piezoelektrische Schichten möglichst dicht an der neutralen Ebene eines Schichtaufbaus angeordnet werden. Die Bedingung großer Biegeradien gegenüber der Gesamtdicke der mehrfachen piezoelektrischen Schichten 15 muß umso strenger eingehalten werden. Bei einem solchen Wandler werden entweder durch Zusammenschaltung der Signalleitungen höhere Signalspannungen oder bei getrennter Signalverarbeitung verbesserte Signal-Geräusch-Verhältnisse der Empfangssignale gewonnen.

In Fig. 2 ist der Aufbau eines Wandlers 20 dargestellt, der nur aus den Trägerschichten 21 und der piezoelektrischen Schicht 15 besteht. An die elektrisch leitenden Beläge der piezoelektrischen Schicht 15 sind die Signalleitungen 17 angeschlossen. Die Trägerschichten 21 haben zur Erzielung der erforderlichen mechanischen Eigenschaften keinen homogenen Aufbau wie die Trägerschichten 11 in den Fig. 1a oder 1b. Die Trägerschichten 21 bestehen aus einem elastischen oder viskoelastischen Kunststoff, in den in seinem inneren Bereich, d.h. in geringen Abstand von der piezoelektrischen Schicht 15, Fasern 23, 24 eingelagert sind. Die kurzen Fasern 23 sind parallel zur piezoelektrischen Schicht 15 in vertikaler Richtung angeordnet, wohingegen die Fasern 24 quer dazu - in Fig.2 senkrecht auf der Papierebene dargestellt - ebenfalls parallel zur piezoelektrischen Schicht 15 in den Kunststoff eingebracht sind. Beide Lagen der Fasern 23, 24 weisen einen möglichst geringen Abstand voneinander auf. Sie können in gleicher Weise durch ein entsprechendes Gewebe oder Fließ ersetzt werden. Die Fasern 23, 24, für die Glas-. Kohle- oder Kevlarfasern zur Anwendung kommen, haben eine sehr hohe Zugsteifigkeit und wirken somit als Bewährung des elastischen bzw. viskoelastischen Kunststoffs, um ihm die für die Trägerschicht 21 erforderliche hohe Biegesteifigkeit zu geben.

Bei einem weiteren Beispiel für den Aufbau eines erfindungsgemäßen Wandlers 30 in Fig. 3 bestehen die Trägerschichten 31 aus einem Verbundschichtstoff. Dabei sind zwei dünne Metallbleche 31.1 und 31.2 über eine viskoelastische Kunststofflage 31.3 miteinander verbunden. Die Trägerschichten 31 sind dann an die piezoelektrische Schicht 15 über die Zwischenschichten 32 angefügt. Eine derart aufgebaute Trägerschicht 31 läßt sich bei Verwendung besonders dünner Metall- (z.B.Stahl-) Bleche mit guter akustischer Transparenz aufbauen, wobei die mehrlagige Konstruktion der Trägerschicht 31 sich durch verbesserte Festigkeits- und Biegesteifigkeitseigenschaften gegenüber der Trägerschicht 11 in Fig. 1 auszeichnet.

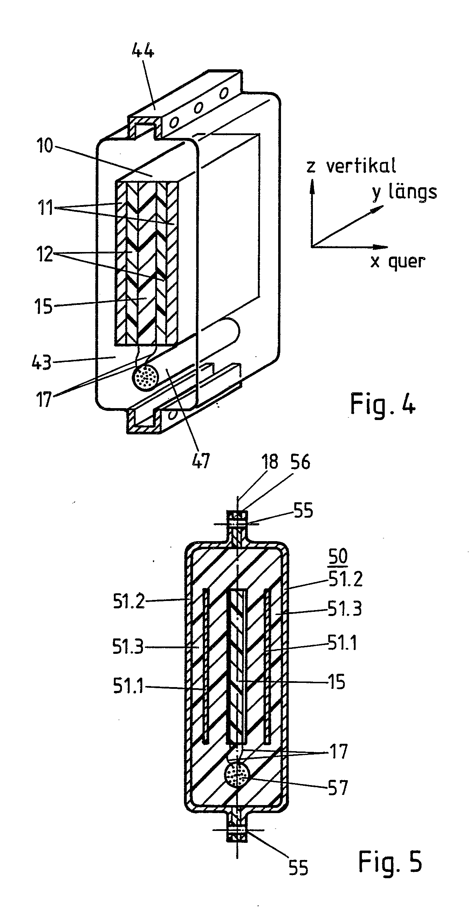

In Fig. 4 ist die Verwendung eines Wandler 10 gemäß Fig. 1 in einer perspektivischen Skizze dargestellt. Der Wandler 10 ist mit einer Umhüllung 43 aus transparentem, viskoelastischem Umgußmaterial, wie Polyurethan, umgeben. Die Umhüllung 43 ist mit Befestigungsflanschen 44 versehen, mit denen der Wandler an Bordwänden von· Schiffen montiert werden kann. Die Integration des Signalkabels 47, in das die Signalleitungen 17 hineinführen, erfolgt gleichzeitig beim Vergießen des Wandlers 10 mit seiner Umhüllung 43.

Der Wandler 10 ist in einer Einbaulage für ein Wasserfahrzeug skizziert, deren Richtungen durch das kartesische Koordinatensystem verdeutlicht werden. Dabei entspricht die X-Achse der Fahrzeugquerrichtung, die Y-Achse der Fahrzeuglängsrichtung und die Z-Achse gibt die Richtung der Vertikalachse an. Es ist angesichts einer derart einfachen Konstruktion leicht zu erkennen, daß die Seitenlängen eines solchen Wandlers 10 sehr gut an die einbautechnischen Bedingungen sowie an die akustischen Erfordernisse angepaßt werden können. Insbesondere vertikale und horizontale Richtcharakteristiken von Einzelelementen oder die Anordnung mehrerer Wandler 10 zu einer Längsantenne sind auf einfache Weise durch Bildung geeigneter Wandlerflächen konstruierbar. Bei einer derartigen Konstruktion einer Wandleranordnung als Längsantenne werden die Wandler 10 in Abständen entsprechend den akustischen Anforderungen, d.h. kleiner als die halbe Wellenlänge, aneinander gereiht, in einer alle Wandler 10 umschließenden gemeinsamen Umhüllung 43 zusammen mit dem durchgehenden Signalkabel 47 vergossen und mit den Befestigungsflanschen 44 unter Einhaltung eines für Entkopplung von Störungen erforderlichen Abstandes an der Bordwand montiert.

In Fig. 5 ist die Konstruktion eines weiteren Wandlers 50 dargestellt, der aus dem Wandler 30 gemäß Fig. 3 entwickelt worden ist. Die Trägerschicht wird aus den dünnen Metallblechen 51.1 und 51.2 sowie der viskoelastischen Kunststofflage 51.3 gebildet. Dabei sind die äußeren Metallbleche 51.2 jeweils verlängert und derart verformt, daß sie, wie der Schnitt durch den Wandler in Fig. 5 zeigt, jeweils ebenfalls die Hälfte eines Wandlergehäuses bilden. Die Enden der Metallbleche 51.2 sind flanschartig ausgebildet und mit Bohrungen 55 für die Befestigung versehen. Zwischen den beiden Gehäuseschalen ist eine Dämpfungsschicht 56 angeordnet, die den Schallübergang von der einen Schale auf die andere verhindert. Ebenso müssen die verwendeten Befestigungsmittel derart gestaltet sein, daß sich weder von der Trägereinrichtung des Wandlers noch zwischen den beiden Gehäuseschalen über das Befestigungsmittel Schallwellen ausbreiten können. Die piezoelektrische Schicht liegt auch bei diesem Wandler 50 exakt in der Symmetrieebene und in der neutralen Faser, so daß auch dieser Wandler 50 unempfindlich gegen Biegeschwingungen ist.

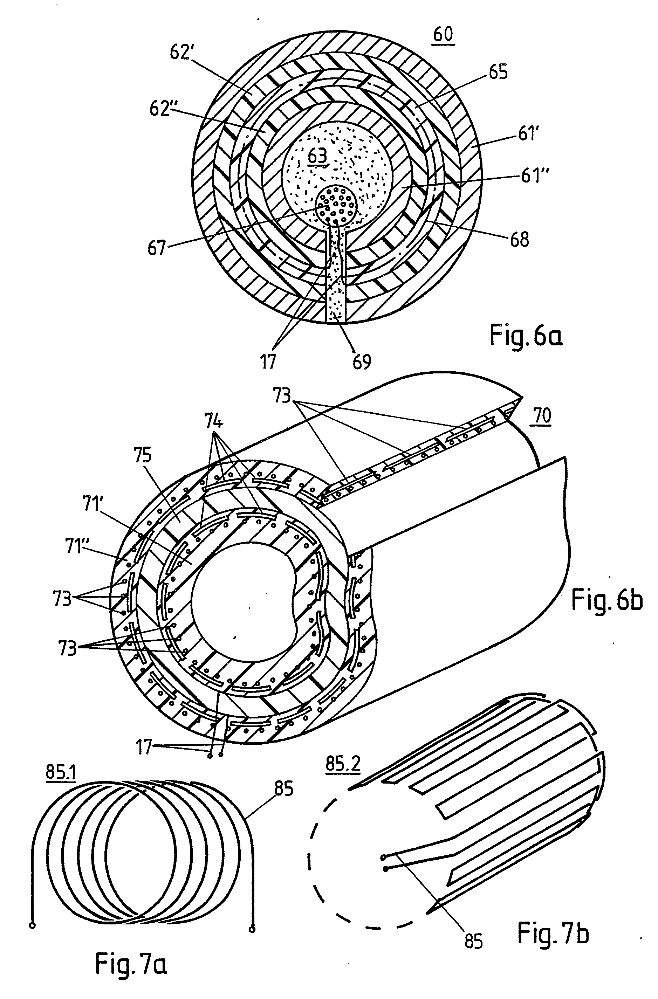

Eine Abwandlung des Wandlergrundprinzips gemäß Fig. 1 zu einem schlauch- oder röhrenförmigen Wandler 60 ist als Schnittbild in Fig. 6a dargestellt. Dabei weisen die innere Trägerschicht $61''$ und die äußere Trägerschicht $61'$ einen Abstand von der piezoelektrischen Schicht 65 mit der strichpunktierten Symmetrielinie 68 auf, der durch die innere viskoelastische Zwischenschicht $62''$ und die äußere viskoelastische Zwischenschicht $62'$ festgelegt ist. Für den dargestellten Wandler ist eine Trennfuge 69 vorgesehen, durch die die Signalleitungen 17 in den inneren Hohlraum 63 geführt werden, in dem ein Signalkabel 67 verläuft. An das Signalkabel 67 sind mehrere konzentrische Wandler 60, die zu einer Wandleranordnung aneinandergereiht sind, angeschlossen. Zur Verbesserung von Auftriebseigenschaften und zur eindeutigen Festlegung des Signalkabels 67 ist der innere Hohlraum 63 zusätzlich durch einen Kunststoff, i.a. einen syntaktischen Schaum, ausgeschäumt. Die mechanischen Belastungen, die auf die piezoelektrische Schicht 65 durch Verbiegen oder Verformen des Wandlers 60 durch innere über das Signalkabel 67 eingeführte oder äußere Kräfte einwirken könnten, werden durch die Trägerschichten 61″ und 61′ sowie die Zwischenschichten 62′ und 62″ verhindert.

In Fig. 6b ist ein konzentrischer und durch äußere Krafteinwirkung verformter Wandler 70 - teilweise aufgeschnitten - dargestellt, der in seinem grundsätzlichen Aufbau dem in Fig. 2 dargestellten Wandler 20 entspricht. Die innere Trägerschicht 71′ und die äußere Trägerschicht 71″ grenzen unmittelbar an die piezoelektrische Schicht 75 an. Die innere und die äußere Trägerschicht 71′, 71″ bestehen aus viskoelastischem Kunststoff mit eingelagerten zug- und biegesteifen Fasern 73, 74. Dabei sind die in unmittelbarer Nähe der piezoelektrischen Schicht angeordneten Fasern 74 in tangentialer Richtung der konzentrischen Anordnung ausgerichtet und wirken insbesondere der dargestellten punktuellen bzw. linienförmigen Verformung und dem dabei erzeugten tangentialen Scherkräften entgegen. Eine weitere Lage Fasern 73 ist quer dazu in Längsrichtung des Wandlers angeordnet und erhöht insbesondere die Biegesteifigkeit des Wandlers 70. Nicht nur die dargestellte extreme sondern auch bereits eliptische Verformungen eines konzentrischen Aufbaus bewirken Biegebeanspruchungen und tangentiale Kräfte, die für die piezoelektrische Schicht 75 in einem Wandler 70 unwirksam sind.

Um eine zusätzliche Biegesteifigkeit des Wandlers 70 bezüglich seiner Längsausdehnung zu erreichen, können über die in Fig. 6b dargestellten Maßnahmen hinaus weitere Glas-, Kohle- oder Kevlarfasern mit großmöglichem Abstand von der piezoelektrischen Schicht 75 in der Trägerschicht 71′ und 71″ vorgesehen werden.

Die Herstellung derartiger Wandler mit dünnen konzentrischen piezoelektrischen Schichten muß nicht zwangsläufig nur mit piezoelektrischer Folie erfolgen, sie kann, wie in Fig. 7a oder Fig. 7b dargestellt, auch durch dünne piezoelektrische Drähte 85 gewickelt werden.

Derartige Drähte 85 sind konzentrisch aufgebaut mit einem elektrischen Innenleiter, der rundherum mit radial polarisiertem, piezoelektrischem Material beschichtet ist und der eine äußere elektrisch leitende Metallisierung als koaxialen Außenleiter aufweist. Ein derartiger piezoelektrischer Draht 85 kann entweder, wie in Fig. 7a dargestellt, spiralförmig oder, wie in Fig. 7b, schleifenartig als flache Zylindermantelwicklung zu einer piezoelektrischen Schicht 85.1 bzw. 85.2 gewickelt werden. Derartig gewickelte piezoelektrische Schichten 85.1 bzw. 85.2 sind besonders als Schichten 65 oder 75 in den Wandlern gemäß Fig. 6a oder Fig. 6b einsetzbar.

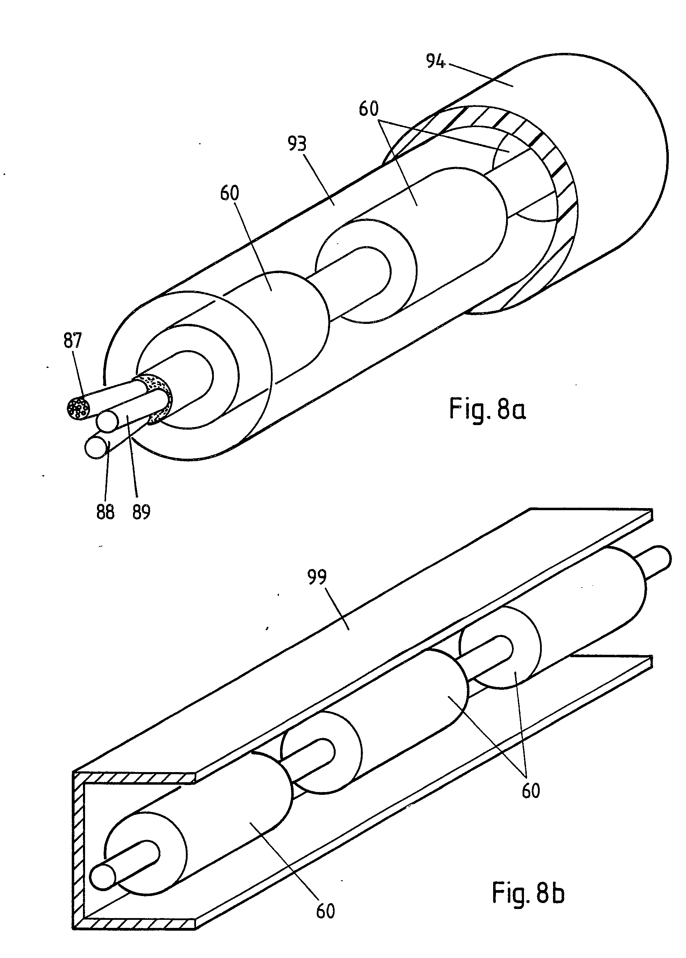

In Fig. 8a und 8b sind zwei weitere Beispiele für die Anwendung konzentrischer Wandler 60 bzw. 70 dargestellt. Fig. 8a zeigt den Abschnitt eines Schleppkabels, dessen äußerer Mantel 94 aufgeschnitten ist und somit die transparente Umhüllung 93 der Wandler 60 freigelegt ist. Mantel 94 und Umhüllung 93 bestehen im allgemeinen aus schalltransparentem, elastischem oder viskoelastischem Kunststoff, wie Polyurethan oder Gummi. Die Wandler 60 sind konzentrisch um alle Versorgungsleitungen angeordnet. Insbesondere sind bei derartigen Schleppkabel die Signalleitungen 87, Trimmschläuche 88 und die Tragfähigkeit und Schleppfähigkeit erhöhende Stahlseile 89 vorgesehen. Die Zwischenräume zwischen diesen Versorgungsleitungen sind zu ihrer Festlegung und Ruhigstellung mit Auftriebsmitteln ausgeschäumt.

In Fig. 8b ist die aus drei Wandlern 60 bestehende Wandleranordnung in einer einseitig offene Ummantelung 99 eingebaut. Derartige Wandleranordnungen finden als Längsantennen an der Bordwand von Unterwasserfahrzeugen Verwendung und werden damit elastisch verbunden. Die Ummantelung 99 stellt insbesondere für Biegewellen eine hohe Impedanz dar, so daß die Wandleranordnung durch diese Abschirmung zusätzlich von Biegewellen entkoppelt wird.

Statt des Wandlers 60 ist in gleicher Weise bei den Wandleranordnungen gemäß Fig. 8a und Fig. 8b ein gemäß Fig. 6b konstruierter Wandler 70 einsetzbar. Ebenso können bei derartigen Wandlern die piezoelektrischen Schichten durch Drahtwickel 85.1 oder 85.2 entsprechend den Fig. 7a oder 7b ersetzt werden.

## Ansprüche

1. Wandler, insbesondere Hydrophon, mit einem Schichtaufbau aus Trägerschicht und damit verbundener piezoelektrischer Schicht, dadurch gekennzeichnet, daß der Schichtaufbau mindestens zwei Trägerschichten aufweist (11, 21, 31, 61, 71) und daß mindestens eine piezoelektrische Schicht (15, 65, 75, 85.1, 85.2) zwischen den Trägerschichten (11, 21, 31, 61, 71) im wesentlichen in der neutralen Ebene (neutrale Faser 18) des Schichtaufbaus angeordnet ist.

2. Wandler nach Anspruch 1, dadurch gekennzeichnet, daß zwischen der piezoelektrischen Schicht (15, 65) und den Trägerschichten (11, 31, 61) jeweils weiche insbesondere biegewellenbedämpfende Zwischenschichten (12, 32, 62) vorgesehen sind, die einerseits mit der piezoelektrischen Schicht (15, 65) und andererseits mit der jeweiligen Trägerschicht (11, 31, 61) verbunden sind.

3. Wandler nach einem oder mehreren der Ansprüche 1 oder 2, dadurch gekennzeichnet, daß die Trägerschicht (31) aus einem mehrlagigen Verbundschichtstoff besteht und daß der Verbundschichtstoff eine für die Biegewellenausbreitung hohe Impedanz aufweist.

4. Wandler nach einem oder mehreren der Ansprüche 1 bis 3, dadurch gekennzeichnet, daß der Verbundschichtstoff mindestens zwei zugfeste Materiallagen, vorzugsweise Metallblechen (31.1, 31.2, 51.1, 51.2), mit zwischenliegender viskoelastischer Kunststofflage (31.3, 51.3) aufweist.

5. Wandler nach einem oder mehreren der Ansprüche 1 bis 3, dadurch gekennzeichnet, daß die Trägerschichten (21, 71) aus einem viskoelastischen Stoff mit eingelagerten, die Zugfestigkeit und Biegesteifigkeit erhöhenden Fasern (23, 24, 73, 74), vorzugsweise Glas-, Kohle- oder Kevlarfasern, besteht.

6. Wandler nach Anspruch 5, dadurch gekennzeichnet, daß von mehreren Lagen der Fasern (23, 24, 73, 74) mindestens eine Lage der Fasern (24, 73) in Längsausdehnung des Wandlers und eine weitere Lage (Fasern 23, 74) quer dazu ausgerichtet sind, wobei die Fasern (24, 73) in Längsausdehnung jeweils den geringeren Abstand zur piezoelektrischen Schicht aufweisen.

7. Wandler nach einem oder mehreren der Ansprüche 1 bis 6, dadurch gekennzeichnet, daß die piezoelektrische Schicht (65, 75, 85.1, 85.2) und die Trägerschichten (61, 71) derart geformt sind, daß sie eine konzentrische, hohlzylindrische Anordnung bilden.

8. Wandler nach einem oder mehreren der Ansprüche 1 bis 7, dadurch gekennzeichnet, daß der Hohlraum (63) der Anordnung zur Aufnahme von Versorgungsleitungen, Signalkabeln (67), Zugseilen (Stahlseile 89), Trimmschläuchen (89) und/oder Auftriebsmitteln ausgebildet ist.

9. Wandler nach Anspruch 7 oder 8, dadurch gekennzeichnet, daß als Auftriebsmittel ein syntaktischer Schaum zum Ausschäumen des inneren Hohlraums (63) verwendet wird.

10. Wandler nach einem oder mehreren der Ansprüche 7 bis 9, dadurch gekennzeichnet, daß die piezoelektrische Schicht (65, 75) aus einer spulenartige, spiralförmige Wicklung (85.1) eines piezoelektrischen Drahtes aufgebaut ist.

11. Wandler nach einem oder mehreren der Ansprüche 1 bis 9, dadurch gekennzeichnet, daß die piezoelektrische Schicht (15, 65, 75) aus einer piezoelektrischen Folie, vorzugsweise Elektretfolie, PVDF-Folie oder Kunststoffolie mit eingelegtem Barium-Titanat- Pulver, besteht.

12. Wandler nach Anspruch 11, dadurch gekennzeichnet, daß die piezoelektrische Schicht (15, 65, 75) im Schichtaufbau derart angeordnet ist, daß ihre Streckrichtung quer zur Ausbreitungsrichtung der Biegewellen ausgerichtet ist.

13. Wandler nach einem oder mehreren der Ansprüche 1 bis 9, dadurch gekennzeichnet, daß die piezoelektrische Schicht (85.2) aus einer Flachspulenwicklung aus piezoelektrischem Draht besteht.

14. Wandler nach einem oder mehreren der Ansprüche 1 bis 13, dadurch gekennzeichnet, daß zwischen den Trägerschichten mehrere mit jeweils getrennten elektrischen Signalleitungen versehene piezoelektrische Schichten angeordnet sind.

15. Wandler nach einem oder mehreren der Ansprüche 1 bis 14, dadurch gekennzeichnet, daß die äußere Lage (51.2) des mehrlagigen Verbundschichtstoffs als Umhüllung und Befestigungsflansch des Wandlers (50) ausgebildet ist.

16. Wandler nach einem oder mehreren der Ansprüche 1 bis 14, dadurch gekennzeichnet, daß der Wandler (10) mit einer Umhüllung (43, 93) aus Polyurethan umgossen und an seinen Enden mit integrierten Befestigungsflanschen (44) versehen ist.

17. Wandler nach einem oder mehrern der Ansprüche 1 bis 16, gekennzeichnet durch eine Ummantelung (99) mit einer für Störsignale, insbesondere für Biegewellen, hohen Impedanz.

Fig.1a

Fig.1b

Fig. 2

Fig. 3

Fig. 4

Fig. 5

Fig. 6a

Fig. 6b

Fig. 7a

Fig. 7b

Fig. 8a

Fig. 8b

KAE 10-86

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 113 288 (SNAVELY) <br> * Spalte 2, Zeile 44 - Spalte 3, Zeile 34; Figur 5 * <br> --- | 1 | G 01 V 1/20 <br> H 04 R 1/44 <br> B 06 B 1/06 |
| X | DE-C- 956 361 (SIEMENS-SCHUCKERTWERKE) <br> * Anspruch 1; Figur 1 * <br> --- | 1 | |
| X | US-A-3 183 378 (McCRACKEN et al.) <br> * Spalte 2, Zeile 68 - Spalte 3, Zeile 14; Figur 3 * <br> --- | 1 | |
| A | US-A-4 402 069 (MILLER et.al.) <br> * Zusammenfassung; Figuren 1-3 * <br> --- | 5 | |
| A | EP-A-0 174 897 (NGK SPARK PLUG CO., LTD) <br> --- | | |
| A,D | FR-A-2 556 165 (RAYTHEON CO.) <br> * Zusammenfassung; Figuren 1-4 * & <br> DE-A-3 443 869 <br> ----- | 1 | |

**RECHERCHIERTE SACHGEBIETE (Int. Cl.4)**

G 01 V
B 06 B
H 01 L
G 10 K

Der vorliegende Recherchenbericht wurde für alle Patentansprüche erstellt

| Recherchenort | Abschlußdatum der Recherche | Prüfer |
|---|---|---|
| DEN HAAG | 12-04-1989 | ANDERSON A.TH. |